# EUROPÄISCHE PATENTANMELDUNG

(11) **EP 4 628 328 A1**
(43) Veröffentlichungstag der Anmeldung: **08.10.2025**
(21) Anmeldenummer: 25165064.4
(22) Anmeldetag: 20.03.2025
(51) Int. Cl.: B60C 11/12, B60C 11/03

(54) **FAHRZEUGREIFEN**

(30) Priorität: 04.04.2024 DE 102024109441
(71) Anmelder: Continental Reifen Deutschland GmbH, 30175 Hannover (DE)
(72) Erfinder: Özüduru, Ahmet, 30175 Hannover (DE); Böhm, Robert, 30175 Hannover (DE); Hindmarsh, Christian, 30175 Hannover (DE); Milchers, Wolfgang, 30175 Hannover (DE)
(74) Vertreter: Continental Corporation

(57) **Zusammenfassung**

Die Erfindung betrifft einen Fahrzeugreifen mit einem Laufstreifen mit Profilpositiven (1) mit Einschnitten (9), wobei jeder Einschnitt (9) zumindest einen mittleren Einschnittteil (12b) aufweist, welcher, im Querschnitt betrachtet, eine bogenförmig verlaufende Einschnittzone (9z) mit einem maximal ausgelenkten Punkt (Pz) aufweist, wobei die Einschnittzone (9z) den mittleren Einschnittteil (12b) parallel zur Laufstreifenperipherie durchquert und diesem einen radial äußeren Sektor (12b₁) und einen radial inneren Sektor (12b₂) verleiht.

Der radial innere Sektor (12b₂) verläuft, im Querschnitt betrachtet, durchgehend gebogen sowie mit übereinstimmender Krümmungsrichtung zur Einschnittzone (9z) im Bereich ihres maximal ausgelenkten Punkts (Pz), wobei sich der radial innere Sektor (12b₂) von seinem radial äußeren Bezugspunkt (Pₐ) zu seinem radial inneren Bezugspunkt (Pᵢ) von einer in radialer Richtung durch den maximal ausgelenkten Punkt (Pz) der Einschnittzone (9z) verlaufenden Bezugslinie (Lz*) zunehmend entfernt.

## Beschreibung

Die Erfindung betrifft einen Fahrzeugreifen mit einem Laufstreifen mit durch Rillen (mit)begrenzten Profilpositiven mit in Draufsicht zur axialen Richtung unter einem Winkel von 0° bis zu 60° verlaufenden Einschnitten mit jeweils einem Einschnittgrund, Einschnittkanten, einer an der Laufstreifenperipherie liegenden Einschnittmittellinie, einer von dieser ausgehenden Einschnittmittelfläche, einer Breite von 0,30 mm bis 2,00 mm und einer maximalen Tiefe von 70% bis 100% der Profiltiefe,
wobei jeder Einschnitt, in Draufsicht betrachtet, zumindest einen mittleren Einschnittteil aufweist, welcher, im in Draufsicht senkrecht zur Einschnittmittellinie ausgerichteten Querschnitt betrachtet, eine von den Einschnittkanten und dem Einschnittgrund in radialer Richtung beabstandete, bogenförmig verlaufende Einschnittzone mit einem auf der Einschnittmittelfläche liegenden, maximal ausgelenkten Punkt aufweist, wobei die Einschnittzone, in Frontansicht betrachtet, den mittleren Einschnittteil parallel zur Laufstreifenperipherie durchquert und diesem einen zwischen den Einschnittkanten und der Einschnittzone verlaufenden, radial äußeren Sektor und einen zwischen der Einschnittzone und dem Einschnittgrund verlaufenden, radial inneren Sektor verleiht,
wobei der radial innere Sektor zwischen einem auf der Einschnittmittelfläche liegenden, radial äußeren Bezugspunkt und einem auf der Einschnittmittelfläche liegenden, radial inneren Bezugspunkt verläuft.

Ein derartiger Fahrzeugreifen ist beispielsweise aus der DE 10 2021 206 775 A1 bekannt. Der Reifen weist einen laufrichtungsgebunden ausgeführten Laufstreifen mit Profilpositiven mit durchquerenden Einschnitten mit einer Breite von 0,40 mm bis 2,00 mm und einer maximalen Tiefe von zumindest 70% der Profiltiefe auf. Jeder Einschnitt weist einen in Draufsicht S-förmig gewellt verlaufenden, mittigen Einschnittabschnitt auf, welcher aus einem über eine erste halbe Wellenlänge verlaufenden, gegen die Abrollrichtung bei Vorwärtsfahrt weisenden, laufstreifeninnenseitigen Abschnittteil und einem über eine zweite halbe Wellenlänge verlaufenden, in die Abrollrichtung bei Vorwärtsfahrt weisenden, laufstreifenaußenseitigen Abschnittteil zusammengesetzt ist, wobei die zweite Wellenlänge größer ist als die erste Wellenlänge. Bevorzugt weist der mittige Einschnittabschnitt, und damit der Einschnitt, einen mittleren Einschnittteil auf, welcher, in Frontansicht betrachtet, von einer von den Einschnittkanten und dem Einschnittgrund in radialer Richtung beabstandeten, bogenförmig verlaufenden Einschnittzone parallel zur Laufstreifenperipherie durchquert und derart in einen radial äußeren Sektor und einen radial inneren Sektor gegliedert ist. Der Reifen soll ein gutes Wasserdrainageverhalten im Bereich der Einschnitte und eine gute Schneegriffperformance aufweisen. Die Einschnittzone stabilisiert die an den Einschnitt angrenzenden Profilsegmente.

Bei Fahrzugreifen der eingangs genannten Art tragen die Einschnitte bekannter Weise deutlich zur Verbesserung des Schneegriffs bei. Diese Verbesserung basiert insbesondere auf der Öffnungsfähigkeit der Einschnitte beim Abplatten des jeweiligen Profilpositivs, wodurch die Einschnittkanten wirkungsvoll in den Schnee eingreifen und derart ein "Fräsverhalten" zeigen. Die bogenförmig verlaufende Einschnittzone trägt zu einer gegenseitigen Abstützung und Stabilisierung der an den jeweiligen Einschnitt angrenzenden Profilbereiche bei, was ebenfalls für die Griffeigenschaften günstig ist.

Die Öffnungsfähigkeit der Einschnitte nimmt mit zunehmenden Laufstreifenabrieb überproportional stark ab, was auf die entsprechend stark zunehmende Steifigkeit der Profilelemente zurückzuführen ist, wodurch die Schneeperformance des Reifens mit fortschreitendem Laufstreifenabrieb nachlässt und vor allem bei stark abgeriebenen Laufstreifen in dieser Hinsicht weiter verbesserungswürdig ist.

Der Erfindung liegt daher die Aufgabe zugrunde, bei einem Fahrzeugreifen der eingangs genannten Art eine bessere Schneeperformance über den Laufstreifenabrieb aufrecht zu erhalten.

Gelöst wird die gestellte Aufgabe erfindungsgemäß dadurch, dass der radial innere Sektor, im in Draufsicht senkrecht zur Einschnittmittellinie ausgerichteten Querschnitt betrachtet, bezogen auf die Einschnittmittelfläche durchgehend gebogen sowie mit übereinstimmender Krümmungsrichtung zur Einschnittzone im Bereich ihres maximal ausgelenkten Punkts verläuft, wobei sich der radial innere Sektor von seinem radial äußeren Bezugspunkt zu seinem radial inneren Bezugspunkt von einer in radialer Richtung durch den maximal ausgelenkten Punkt der Einschnittzone verlaufenden Bezugslinie zunehmend entfernt.

Der radial innerhalb der bogenförmig verlaufenden Einschnittzone befindliche radial innere Sektor verbessert nach dem Abrieb der Einschnittzone das Öffnungsverhalten der Einschnitte beim Abplatten das Laufstreifens deutlich, insbesondere unter Traktions- und/oder Bremsbelastung - je nach in Draufsicht vorliegender Orientierung (Winkelung) der Einschnitte und der Orientierung des radial inneren Sektors relativ zur Abrollrichtung. Es bleibt somit ein sehr gutes "Fräsverhalten" der Einschnittkanten auch bei durch den fortgeschrittenen Abrieb steiferen Profilelementen erhalten, sodass eine bessere Schneeperformance über den Laufstreifenabrieb gegeben ist.

Gemäß einer bevorzugten Ausführung weist der radial innere Sektor, im in Draufsicht senkrecht zur Einschnittmittellinie ausgerichteten Querschnitt betrachtet, eine in radialer Richtung zwischen seinem radial äußeren Bezugspunkt und seinem radial inneren Bezugspunkt ermittelte Länge von 10% bis 25%, insbesondere von 15% bis 20%, der maximalen Tiefe des Einschnitts auf. Ein derart lang ausgeführter, radial innerer Sektor ist für die Aufrechterhaltung der Schneeperformance über den Laufstreifenabrieb von Vorteil.

Für das erwähnte Fräsverhalten der Einschnittkanten bei entsprechend fortgeschrittenem Abrieb ist es von Vorteil, wenn der radial innere Sektor, im in Draufsicht senkrecht zur Einschnittmittellinie ausgerichteten Querschnitt betrachtet und bezogen auf eine zwischen dem radial äußeren Bezugspunkt und dem radial inneren Bezugspunkt gerade verlaufende Bezugslinie, zur radialen Richtung unter einem Winkel von 2° bis 15°, insbesondere von 4° bis 10°, verläuft.

Gemäß einer weiteren bevorzugten Ausführung weist der Einschnitt, in Draufsicht betrachtet, einen aus dem bzw. jedem mittlere Einschnittteil und jeweils zwei seitlichen Einschnittteilen gebildeten bis zum Einschnittgrund reichenden, in Form eines basisfreien Trapezes verlaufenden Einschnittabschnitt auf, wobei der mittlere Einschnittteil die kürzere Grundseite des Trapezes und die seitlichen Einschnittteile die zwei Trapezschenkel bilden. Die Trapezform sorgt vor allem bei wenig abgeriebenem Laufstreifen für zusätzliche gegenseitige Abstützungseffekte der Profilelemente, wodurch das Fräsverhalten der Einschnittkanten bei wenig abgeriebenem Laufstreifen verbessert ist. Bei entsprechend fortgeschrittenem Laufstreifenabrieb tritt dieser Effekt in den Hintergrund und es sorgt der an die Laufstreifenaußenseite tretende, radial innere Sektor, wie bereits erwähnt, für ein sehr gutes Fräsverhalten der Einschnittkanten. Es ist somit die Schneeperformance über den Laufstreifenabrieb zusätzlich verbessert.

Bei der letztgenannten bevorzugten Ausführung ist gemäß einer vorteilhaften Weiterentwicklung vorgesehen, dass die Einschnittzone in jeden seitlichen Einschnittteil hineinverläuft und bevorzugt jeden seitlichen Einschnittteil, in Frontansicht betrachtet, parallel zur Laufstreifenperipherie durchquert. Dies trägt ebenfalls zu einer weiteren Verbesserung des Fräsverhaltens der Einschnittkanten bei.

Das Öffnungsverhalten der Einschnitte ist auf eine die Griffwirkung der Einschnittkanten weiter verbessernde Weise beeinflusst, wenn gemäß einer weiteren vorteilhaften Weiterentwicklung der letztgenannten bevorzugten Ausführung der Einschnitt, in Draufsicht betrachtet, zumindest einen, bevorzugt zwei gerade verlaufende(n), randseitige(n) Einschnittabschnitt(e) aufweist, insbesondere aus den zwei randseitigen Einschnittabschnitten und dem in Form eines basisfreien Trapezes verlaufenden Einschnittabschnitt zusammengesetzt ist, wobei der bzw. die randseitige(n) Einschnittabschnitt(e) im Bereich außerhalb der Einschnittzone, im in Draufsicht senkrecht zur Einschnittmittellinie verlaufenden Querschnitt betrachtet, gerade sowie insbesondere in radialer Richtung verlaufen.

Bei dieser vorteilhaften Weiterentwicklung ist es günstig, wenn die die Trapezschenkel bildenden, seitlichen Einschnittteile jeweils einen zwischen den Einschnittkanten und der Einschnittzone verlaufenden, radial äußeren Sektor und einen zwischen der Einschnittzone und dem Einschnittgrund verlaufenden, radial inneren Sektor aufweisen, wobei der radial innere Sektor des einen bzw. jedes seitlichen Einschnittteils einen tangentialen Übergang vom radial inneren Sektor des mittleren Einschnittteils zum bzw. zum jeweiligen radial innerhalb der Einschnittzone liegenden Bereich des bzw. des jeweiligen randseitigen Einschnittabschnitts bildet. Dies trägt zu einer Reduktion der Scherkräfte im Bereich des Einschnitts bei, sodass eine hohe Rissbeständigkeit des angrenzenden Gummimaterials erhalten bleibt. Es ist daher die Gefahr des Auftretens und des Fortpflanzens von Rissen in den Bereich der Einschnittkanten reduziert, sodass diese auf ausgeprägte Weise zur Aufrechterhaltung der Schneegriffperformance über den Laufstreifenabrieb beitragen.

Bei der letztgenannten vorteilhaften Weiterentwicklung ist es ferner günstig, wenn die Einschnittzone jeden seitlichen Einschnittteil, in Frontansicht betrachtet, parallel zur Laufstreifenperipherie durchquert und jeweils mit einem Zonenendabschnitt in den bzw. jeden der randseitigen Einschnittabschnitt(e) hineinverläuft, wobei der Zonenendabschnitt eine parallel zur Laufstreifenperipherie ermittelte, maximale Länge von bis zu 6,0 mm, insbesondere von bis zu 4,5 mm, aufweist.

Gemäß einer weiteren bevorzugten Ausführungsform ist vorgesehen, dass die Einschnittzone, im in Draufsicht senkrecht zur Einschnittmittellinie ausgerichteten Querschnitt betrachtet, eine auf die Einschnittmittelfläche bezogene, in radialer Richtung ermittelte Breite von 25% bis 45%, insbesondere von 30% bis 40%, der maximalen Tiefe des Einschnitts aufweist.

Gemäß einer weiteren bevorzugten Ausführung ist der Einschnittgrund kanalförmig und weist, im in Draufsicht senkrecht zur Einschnittmittellinie ausgerichteten Querschnitt betrachtet, eine parallel zur Laufstreifenperipherie ermittelte maximale Breite auf, welche 0,10 mm bis 0,50 mm, insbesondere 0,20 mm bis 0,40 mm, größer ist als die Breite des Einschnitts. Ein solcher Einschnittgrund ist besonders rissbeständig und verbessert das Wasseraufnahmeverhalten des Einschnitts.

Bei der letztgenannten Ausführung ist gemäß einer vorteilhaften Weiterentwicklung vorgesehene, dass der Einschnittgrund kreissegmentförmig ausgeführt ist, sodass er einen Durchmesser aufweist, welcher 0,10 mm bis 0,50 mm, insbesondere 0,20 mm bis 0,40 mm, größer ist als die Breite des Einschnitts.

Gemäß einer weiteren bevorzugten Ausführung weist der Laufstreifen eine laufrichtungsgebundene Profilierung auf, wobei die Profilpositive Profilblöcke sind, wobei die Profilblöcke von den Einschnitten durchquert sind und den Profilblöcken jeweils ein beim Abrollen des Reifens bei Vorwärtsfahrt zuerst in den Untergrund eintretendes, einlaufendes, randseitiges Blocksegment und ein auslaufendes, randseitiges Blocksegment verleihen, wobei der radial innere Sektor des mittleren Einschnittteils, im in Draufsicht senkrecht zur Einschnittmittellinie verlaufenden Querschnitt betrachtet und bezogen die zwischen seinen radial äußeren Bezugspunkt und seinen radial inneren Bezugspunkt gerade verlaufende Bezugslinie, derart zur radialen Richtung geneigt verläuft, dass dieser ausgehend vom Einschnittgrund in Richtung zum auslaufenden, randseitigen Blocksegment geneigt ist. Dies trägt ebenfalls zu einer weiteren Verbesserung der Schneeperformance bei, weil derart orientierte Einschnitte beim Abplatten des Laufstreifens auf besonders deutlich Aufklappen.

Gemäß einer vorteilhafter Weiterentwicklung der letztgenannten bevorzugten Ausführung sind die Einschnittkanten jedes Einschnitts eine beim Abrollen des Reifens bei Vorwärtsfahrt zuerst in den Untergrund eintretende, einlaufende Einschnittkante und eine auslaufende Einschnittkante, wobei die Einschnittzone aus einem an der von der einlaufenden Einschnittkante ausgehenden Einschnittwand befindlichen Vorsprung und einer mit diesem korrespondierend ausgeführten, an der von der auslaufenden Einschnittkante ausgehenden Einschnittwand vorhandenen Vertiefung gebildet ist. Dadurch sind die Abstützungseffekte weiter verbessert.

Eine weitere bevorzugte Ausführung sieht vor, dass der auf der Einschnittmittelfläche liegende, maximal ausgelenkte Punkt der Einschnittzone, im in Draufsicht senkrecht zur Einschnittmittellinie ausgerichteten Querschnitt betrachtet, ermittelt senkrecht zu einer die Einschnittmittelfläche zwischen dem radial äußeren Ende der Einschnittzone und dem radial inneren Ende der Einschnittzone verbindenden, gerade verlaufenden Bezugslinie eine maximale Auslenkung von 0,5 mm bis 1,5 mm aufweist. Auch diese Ausführung trägt zu einer weiteren Verbesserung der Abstützungseffekte bei.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen Profilblock eines in die Ebene abgewickelten Laufstreifens eines Fahrzeugluftreifens mit einer Ausführungsvariante der Erfindung,
Fig. 2 eine vergrößerte Draufsicht auf einen Abzugskörper (eine Visualisierung) eines Einschnitts,
Fig. 2a eine weiter vergrößerte Draufsicht auf das Detail Z₂ₐ der Fig. 2,
Fig. 3 eine Frontansicht auf den Abzugskörper des Einschnitts aus Fig. 2 gemäß der durch den Pfeil S₃ angedeuteten Sichtrichtung,
Fig. 4 einen Schnitt entlang der Linie IV-IV der Fig. 3 mit an den Einschnitt angrenzendem Gummimaterial,
Fig. 4a einen perspektivischen Schnitt des Abzugskörpers des Einschnitts entlang der Linie IV-IV der Fig. 3,
Fig. 5 einen Schnitt entlang der Linie V-V der Fig. 3 mit an den Einschnitt angrenzendem Gummimaterial,
Fig. 5a einen perspektivischen Schnitt des Abzugskörpers des Einschnitts entlang der Linie V-V der Fig. 3,

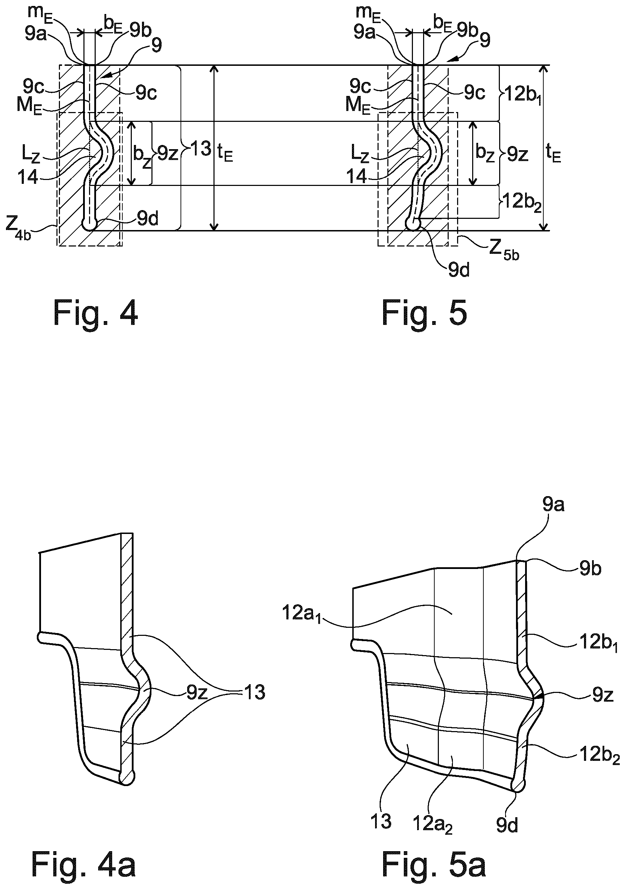

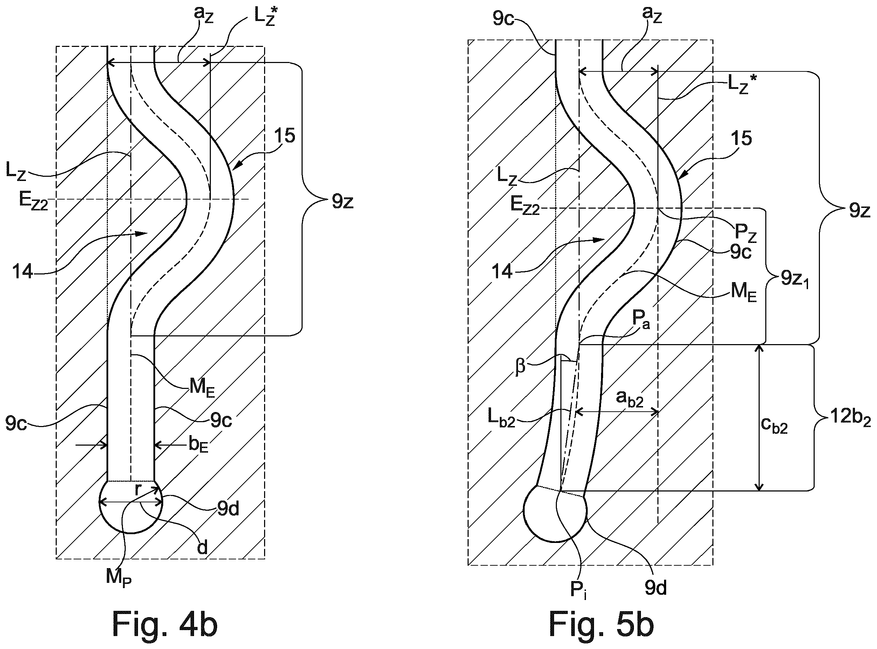

Fig. 4b eine vergrößerte Ansicht auf das Detail Z_{4b} der Fig. 4 und
Fig. 5b eine vergrößerte Ansicht auf das Detail Z_{5b} der Fig. 5.

Gemäß der Erfindung ausgeführte Fahrzeugreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Fahrzeugluftreifen, besonders bevorzugt Fahrzeugluftreifen in Radialbauart, für Felgen mit einem ganzzahligen Felgendurchmesser von 13 Zoll bis 24 Zoll, insbesondere von 14 Zoll bis 19 Zoll.

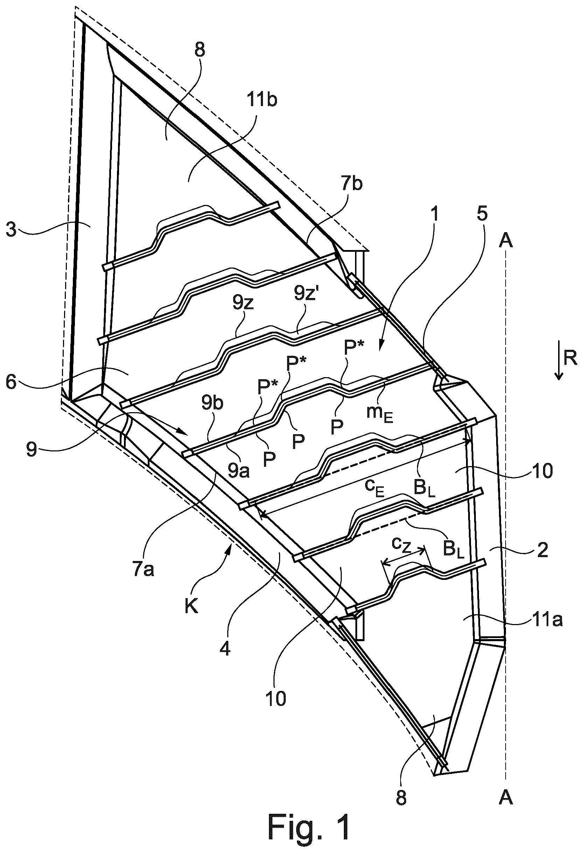

Fig. 1 zeigt eine Draufsicht auf einen mittigen Profilblock 1 eines Laufstreifens eines Fahrzeugluftreifens. Die Reifenäquatorialebene ist durch eine Linie A-A gekennzeichnet. Der Laufstreifen weist eine laufrichtungsgebundene Profilierung auf, wobei der Fahrzeugluftreifen derart an einem Fahrzeug, etwa einem PKW, zu montieren ist, dass er die durch den Pfeil R symbolisierte Abrollrichtung bei Vorwärtsfahrt aufweist.

Der mittige Profilblock 1 befindet sich seitlich der Reifenäquatorialebene (Linie A-A) und ist Teil einer in Umfangsrichtung umlaufenden, mittigen Profilblockreihe aus einer Vielzahl von mittigen Profilblöcken 1. Die mittige Profilblockreihe, also die mittigen Profilblöcke 1, ist bzw. sind laufstreifeninnenseitig durch eine entlang der Reifenäquatorialebene (Linie A-A) umlaufende, zentrale Umfangsrille 2 (in Fig. I lediglich angedeutet) und laufstreifenaußenseitig durch eine umlaufende, schulterseitige Umfangsrille 3 (in Fig. I lediglich angedeutet) begrenzt. Innerhalb der Profilblockreihe sind die jeweils aufeinanderfolgenden, mittigen Profilblöcke 1 durch Rillen-Einschnitt-Kombinationen K getrennt.

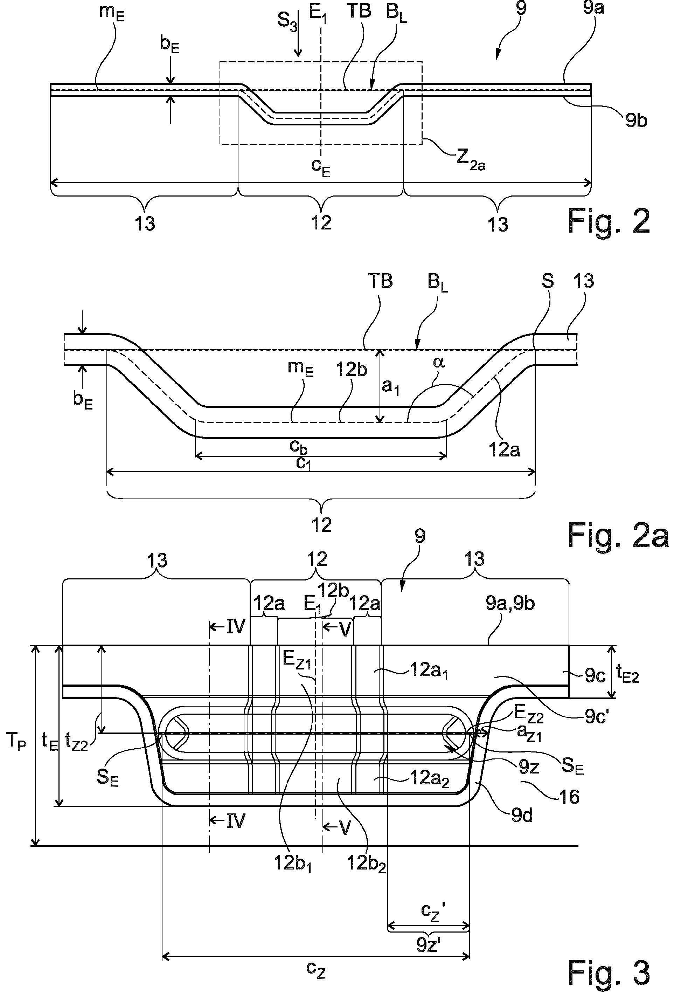

Die Umfangsrillen 2, 3 sind in radialer Richtung auf die jeweils vorgesehene Profiltiefe T_{P} (eingezeichnet in Fig. 3) ausgeführt, welche für den bevorzugten Reifentyp üblicherweise 6,5 mm bis 13,0 mm beträgt. Sind die Umfangsrillen 2, 3 verschieden tief ausgeführt, wird unter der Profiltiefe T_{P} die Tiefe der tiefsten Umfangsrille 2, 3 verstanden.

Die Rillen-Einschnitt-Kombinationen K sind, in Draufsicht betrachtet, jeweils aus einer zur axialen Richtung unter einem Winkel verlaufenden Sackrille 4, welche laufstreifenaußenseitig in die schulterseitige Umfangsrille 3 einmündet und laufstreifeninnenseitig vor der zentralen Umfangsrille 2 endet, und einem zwischen dem laufstreifeninnenseitigen Rillenende der Sackrille 4 und der zentralen Umfangsrille 2 verlaufenden Einschnitt 5 gebildet.

Die Umfangsrillen 2, 3 sowie die Sackrillen 4 weisen, in Draufsicht betrachtet, an der Laufstreifenperipherie jeweils eine maximale Breite (Breite an der breitesten Stelle) von 4,0 mm bis 10,0 mm auf, wobei die maximale Breite senkrecht zu einer dem Rillenverlauf folgenden Rillenmittellinie (nicht eingezeichnet) ermittelt ist. Die Sackrillen 4 weisen ferner in radialer Richtung eine maximale Tiefe (Tiefe an der tiefsten Stelle) von 60% bis 100%, insbesondere von mindestens 65%, und bevorzugt von mindestens 70% der Profiltiefe T_{P} (Fig. 3) auf.

Der mittige Profilblock 1 weist, in Draufsicht betrachtet, eine in axialer Richtung langgestreckt parallelogrammförmige Gestalt auf, verfügt über zwei einander diagonal gegenüberliegende, spitzwinkelige Blockeckbereiche 8, weist ferner eine in der Laufstreifenperipherie liegende Blockaußenfläche 6, eine an der einen angrenzenden Rillen-Einschnitt-Kombination K ausgebildete, beim Abrollen des Reifens bei Vorwärtsfahrt (Pfeil R) zuerst in den Untergrund eintretende, einlaufende Blockkante 7a und eine an der anderen angrenzenden Rillen-Einschnitt-Kombination K ausgebildete, auslaufende Blockkante 7b auf, wobei die Blockkanten 7a, 7b in Draufsicht parallel zueinander verlaufen.

Der mittige Profilblock 1 ist mit sieben durchquerenden, in Draufsicht bezüglich der Umfangsrichtung gegensinnig zu den Blockkanten 7a, 7b geneigt verlaufenden Einschnitten 9 versehen, welche dem Profilblock 1 je zwischen zwei Einschnitten 9 liegende, mittlere Blocksegmente 10, ein beim Abrollen des Reifens bei Vorwärtsfahrt (Pfeil R) zuerst in den Untergrund eintretendes, einlaufendes, randseitiges Blocksegment 11a und ein auslaufendes, randseitiges Blocksegment 11b verleihen. Die Blocksegmente 11a, 11b umfassen jeweils einen der spitzwinkeligen Blockeckbereiche 8.

Die weitere Ausgestaltung der Einschnitte 9 wird nachfolgend anhand eines einzelnen Einschnitts 9 erläutert.

Fig. 2 zeigt eine Draufsicht auf einen Einschnitt 9, wobei beim gezeigten Ausführungsbeispiel die Ausgestaltung jedes Einschnitts 9, wie noch beschrieben wird, zusätzlich auf seine jeweilige Position im mittigen Profilblock 1 angepasst ist.

Gemäß Fig. 2 weist der Einschnitt 9 an der Blockaußenfläche 6 (vergl. Fig. 1) eine einlaufende Einschnittkante 9a und eine auslaufende Einschnittkante 9b auf, wobei beim Abrollen des Reifens bei Vorwärtsfahrt (vergl. Pfeil R in Fig. 1) jeder Punkt P (Fig. 1) auf der einlaufenden Einschnittkante 9a vor einem diesem exakt in Umfangsrichtung gegenüberliegenden Punkt P* (Fig. 1) auf der auslaufenden Einschnittkante 9b in den Untergrund eintritt. In Fig. 1 sind bei einem Einschnitt 9 exemplarisch je drei Punkte P und die diesen jeweils exakt in Umfangsrichtung gegenüberliegenden drei Punkte P* gekennzeichnet.

Wie Fig. 3 bis Fig. 5 zeigen, ist der Einschnitt 9 durch zwei von den Einschnittkanten 9a, 9b (Fig. 4, Fig. 5) ausgehenden, einander gegenüberliegenden Einschnittwänden 9c (Fig. 4, Fig. 5) und einen kanalförmigen Einschnittgrund 9d begrenzt. Gemäß Fig. 2 weist der Einschnitt 9 eine in Draufsicht dem Einschnittverlauf folgende, am Niveau der Blockaußenfläche 6 (vergl. Fig. 1) liegende, übereinstimmend den Einschnittkanten 9a, 9b beabstandete Einschnittmittellinie m_{E}, eine von der Einschnittmittellinie m_{E} ausgehende, zu den Einschnittwänden 9c übereinstimmend beabstandete Einschnittmittelfläche M_{E} (Fig. 4, Fig. 5), eine zwischen den Einschnittwänden 9c als kleinstmöglichen Abstand und daher senkrecht zur Einschnittmittelfläche M_{E} ermittelte, konstante Breite b_{E} (Fig. 2, Fig. 4, Fig. 5) von 0,30 mm bis 2,00 mm, insbesondere von bis zu 1,20 mm, vorzugsweise von bis zu 1,00 mm, besonders bevorzugt von bis zu 0,80 mm, am meisten bevorzugt von bis zu 0,60 mm, sowie eine in radialer Richtung ermittelte, auf das radial innere Ende des Einschnittgrunds 9d bezogene, maximale Tiefe t_{E} von 60% bis 100%, insbesondere von 70% bis 95%, der Profiltiefe T_{P} (Fig. 3) auf.

Wie Fig. 4 zeigt, ist der Einschnittgrund 9d, im in Draufsicht senkrecht zur Einschnittmittellinie m_{E} verlaufenden Querschnitt betrachtet (vergl. Lage der Linie IV-IV in Fig. 3 in Kombination mit dem Verlauf der Einschnittmittellinie m_{E} in Fig. 2), kreissegmentförmig ausgeführt, wobei der Einschnittgrund 9d gemäß Fig. 4b entlang eines auf den zugehörigen Kreismittelpunkt M_{P} bezogenen Radius r verläuft und einen Durchmesser d aufweist, welcher 0,10 mm bis 0,50 mm, insbesondere 0,20 mm bis 0,40 mm, größer ist als die Breite b_{E} des Einschnitts 9.

Gemäß Fig. 2 setzt sich der Einschnitt 9, in Draufsicht betrachtet, aus einem in Form eines basisfreien, vorzugsweise gleichschenkeligen, Trapezes verlaufenden, mittigen Einschnittabschnitt 12 sowie zwei gerade sowie fluchtend miteinander, daher in geradliniger Fortsetzung zueinander, verlaufenden, randseitigen Einschnittabschnitten 13 zusammen, wobei die Einschnittabschnitte 12, 13 in radialer Richtung jeweils bis zum Einschnittgrund 9d reichen (Fig. 3). Wie Fig. 3 zeigt, ist in jedem randseitigen Einschnittabschnitt 13 eine an das jeweilige Einschnittende angrenzende Grundanhebung 16 ausgebildet, wobei jeder Einschnittabschnitt 13 in seinem seichtesten Bereich eine in radialer Richtung ermittelte, auf das radial innere Ende des Einschnittgrunds 9d bezogene Tiefe t_{E2} von 25% bis 45% der maximalen Tiefe t_{E} aufweist.

Wie Fig. 2 ferner zeigt, weist der Einschnitt 9, in Draufsicht betrachtet, an der Laufstreifenperipherie, also am Niveau der Blockaußenfläche 6 (vergl. Fig. 1), eine in seiner Längserstreckungsrichtung ausgerichtete, gerade sowie mittig durch die randseitigen Einschnittabschnitte 13 verlaufende Einschnittbasislinie B_{L} auf, welche im Bereich der randseitigen Einschnittabschnitte 13 mit der Einschnittmittellinie m_{E} zusammenfällt. Die Einschnitte 9 verlaufen, in Draufsicht betrachtet, bezüglich ihrer Einschnittbasislinien B_{L} parallel zueinander (Fig. 1), weisen - ebenfalls jeweils bezogen auf die Einschnittbasislinien B_{L} - die erwähnte relative zur Umfangsrichtung vorliegende, gegensinnig Neigung gegenüber den Blockkanten 7a, 7b (Fig. 1) sowie ferner jeweils eine Länge c_{E} (vergl. Fig. 1) auf.

Der mittige Einschnittabschnitt 12 weist eine in Draufsicht senkrecht zur Einschnittbasislinie B_{L} und senkrecht zur Einschnittmittellinie m_{E} sowie in radialer Richtung verlaufende Symmetrieebene E₁ (vergl. Fig. 3) auf, endet beidseitig an der Einschnittbasislinie B_{L}, weist entlang der Einschnittbasislinie B_{L} eine "fiktive" die längere Grundseite des Trapezes bildende, gerade verlaufende Trapezbasislinie TB und eine entlang der Trapezbasislinie TB ermittelte Länge c₁ (Fig. 2a) von 3,0 mm bis 10,0 mm, insbesondere von 4,0 mm bis 8,0 mm, bevorzugt von 5,5 mm bis 7,0 mm, sowie ergänzend von insbesondere höchstens 45%, bevorzugt von höchstens 40%, der jeweils zugehörigen Länge c_{E} (Fig. 1, Fig. 2) auf. Beim gezeigten Ausführungsbeispiel ist der gesamte Einschnitt 9 bezüglich der Symmetrieebene E₁ symmetrisch.

Gemäß Fig. 2a setzt sich der mittige Einschnittabschnitt 12 aus zwei an je einen der randseitigen Einschnittabschnitte 13 anschließenden, von den Enden der Trapezbasislinie TB ausgehenden, gerade verlaufenden, je einen Trapezschenkel bildenden, seitlichen Einschnittteilen 12a und einem gerade sowie zur Einschnittbasislinie B_{L} und der Trapezbasislinie TB parallelversetzt verlaufenden, die kürzere Grundseite des Trapezes bildenden, mittleren Einschnittteil 12b zusammen. Die Übergangsbereiche zwischen den seitlichen Einschnittteilen 12a zum mittleren Einschnittteil 12b sowie die Übergangsbereiche der seitlichen Einschnittteilen 12a zum jeweils anschließenden, randseitigen Einschnittabschnitt 13 sind beim Ausführungsbeispiel verrundet ausgeführt. Der gegenseitige Anschluss des mittigen Einschnittabschnitts 12, genauer des jeweiligen seitlichen Einschnittteils 12a, an die bzw. den jeweiligen randseitigen Einschnittabschnitt(e) 13 ist jeweils durch eine Anschlussstelle S definiert. Bei der Festlegung (Ermittlung) der Anschlussstellen S bleiben die verrundeten Übergangsbereiche unberücksichtigt, sodass die Anschlussstellen S auf der zugehörigen Einschnittbasislinie B_{L} liegen und somit derart ermittelt sind, als wären die verrundeten Übergangsbereiche nicht vorhanden, sondern die randseitigen Einschnittabschnitte 13 und die seitlichen Einschnittteile 12a in den verrundeten Übergangsbereichen gerade fortgeführt. Die Trapezbasislinie TB verläuft daher zwischen den Anschlussstellen S.

Der mittlere Einschnittteil 12b verläuft, bezogen auf die Einschnittmittellinie m_{E}, in Richtung zum auslaufenden, randseitigen Blocksegment 11b (Fig. 1) parallelversetzt zur Einschnittbasislinie B_{L}, also parallelversetzt zur Trapezbasislinie TB, weist, ebenfalls bezogen auf die Einschnittmittellinie m_{E}, senkrecht zur Einschnittbasislinie B_{L} bzw. der Trapezbasislinie TB einen Abstand a₁ von 100% bis 350%, insbesondere von 150% bis 300%, bevorzugt von 200% bis 250%, der Breite b_{E} des Einschnitts 9 und eine entlang der Einschnittmittellinie m_{E} gemessene Erstreckungslänge c_{b} von 45% bis 65%, insbesondere von 50% bis 60%, der Länge c₁ des mittigen Einschnittabschnitts 12 auf. Die Ermittlung der Erstreckungslänge c_{b} erfolgt derart, als wären die erwähnten verrundeten Übergangsbereiche nicht vorhanden, sondern die Einschnittteile 12a, 12b in den Übergangsbereichen gerade fortgeführt (analog zur Ermittlung der Anschlussstellen S). Der Abstand a₁, die Länge c₁ und die Erstreckungslänge c_{b} sind bevorzugt derart aufeinander abgestimmt, dass die seitlichen Einschnittteile 12a mit dem mittleren Einschnittteil 12b - bezogen auf die Einschnittmittellinie m_{E} - jeweils einen Winkel α von 135° bis 145° einschließen.

Gemäß Fig. 3 weist der Einschnitt 9 eine von den Einschnittkanten 9a, 9b und dem Einschnittgrund 9d beabstandete, eine lokale Ausbauchung bildende, mittlere Einschnittzone 9z auf, welche zumindest über den kompletten, mittleren Einschnittteil 12b verläuft, diesen daher durchquert, bevorzugt in jeden der seitlichen Einschnittteile 12a hineinverläuft, diese bevorzugt ebenfalls durchquert, und besonders bevorzugt mit einem Zonenendabschnitt 9z' in jeden randseitigen Einschnittabschnitt 13 hineinverläuft (vergl. die in dieser Hinsicht verschiedenen Ausgestaltungen der mittleren Einschnittzonen 9z in Fig. 1).

Wie Fig. 1 zeigt, unterscheiden sich die Einschnitte 9 innerhalb des Profilbocks 1 beim gezeigten Ausführungsbeispiel teilweise im Hinblick auf ihre Länge c_{E}, die Länge c₁ (vergl. Fig. 2a) des mittigen Einschnittabschnitts 12, die Länge der randseitigen Einschnittabschnitte 13 (vergl. Fig. 2) und die Ausführung der Einschnittzone 9z, wie noch erläutert wird.

Gemäß Fig. 3 weist die Einschnittzone 9z, bei Sicht auf die Einschnittwände 9c betrachtet, die Form eines parallel zur Laufstreifenperipherie langgestreckten Rechtecks mit halbkreisförmig verrundeten Längsenden auf. Gemäß Fig. 4 und Fig. 5 verläuft die Einschnittzone 9z, im in Draufsicht senkrecht zur Einschnittmittellinie m_{E} ausgerichteten Querschnitt betrachtet (vergl. Lage der Linien IV-IV und V-V sowie Verlauf der Einschnittmittellinie m_{E} in Fig. 2), bogenförmig, wobei die Einschnittzone 9z aus zwei bezüglich der Einschnittmittelfläche M_{E} jeweils in Gestalt einer S-förmig geschwungenen Kurve mit genau einem Wendepunkt verlaufenden Zonenhälften 9z₁ (Fig. 5b) zusammengesetzt ist und einen auf der Einschnittmittelfläche M_{E} am gegenseitigen Anschluss der Zonenhälften 9z₁ liegenden, maximal ausgelenkten Punkt Pz (Fig. 5b) aufweist. Die Einschnittzone 9z weist ferner eine auf die Einschnittmittelfläche M_{E} bezogene, in radialer Richtung ermittelte Breite b_{Z} von 25% bis 45%, insbesondere von 30% bis 40%, der maximalen Tiefe t_{E} des Einschnitts 9 und gemäß Fig. 3 eine in Draufsicht senkrecht zur Einschnittmittellinie m_{E} (vergl. Fig. 2) sowie in radialer Richtung verlaufende, mit der Symmetrieebene E₁ des mittigen Einschnittabschnitts 12 zusammenfallende Symmetrieebene E_{Z1} und eine in einer in radialer Richtung ermittelten, konstanten Tiefe t_{Z2} verlaufende Symmetrieebene E_{Z2} auf. Gemäß Fig. 3 weist die Einschnittzone 9z eine parallel zur Laufstreifenperipherie und parallel zur Einschnittbasislinie B_{L} (vergl. Fig. 2) sowie zwischen den Schnittpunkten S_{E} (angedeutet) der Symmetrieebene E_{Z2} und der Einschnittmittelfläche M_{E} (Fig. 4) ermittelte, maximale Länge cz (Länge an der längsten Stelle) auf, wobei die Einschnittzone 9z bei einigen Einschnitten 9 (siehe Fig. 1) jeweils mit einem der bereits erwähnten Zonenendabschnitte 9z' mit einer analog zur maximalen Länge c_{z} ermittelten, maximalen Länge c_{Z}' von bis zu 6,0 mm, insbesondere von bis zu 4,5 mm, in jeden randseitigen Einschnittabschnitt 13 hineinragt. Bevorzugt weist jeder Zonenendabschnitt 9z' - bezogen auf den jeweiligen Schnittpunkt S_{E} - zum Einschnittgrund 9d einen in der Symmetrieebene E_{Z2} parallel zur Laufstreifenperipherie ermittelten Abstand a_{Z1} von zumindest 1,0 mm auf.

In Fig. 4 und Fig. 5 ist eine die Einschnittmittelfläche M_{E} zwischen dem radial äußeren Ende der Einschnittzone 9z und dem radial inneren Ende der Einschnittzone 9z verbindende, gerade verlaufende Bezugslinie Lz eingezeichnet. Gemäß Fig. 4b und Fig. 5b weist die Einschnittzone 9z, im in Draufsicht senkrecht zur Einschnittmittellinie m_{E} verlaufenden Querschnitt betrachtet, in der Symmetrieebene E_{Z2} eine senkrecht zur Bezugslinie Lz sowie zwischen der Bezugslinie Lz und der Einschnittmittelfläche M_{E} ermittelte, maximale Auslenkung az von 0,5 mm bis 1,5 mm auf. Die Einschnittzone 9z ist ferner derart ausgeführt, dass diese aus einem an der von der einlaufenden Einschnittkante 9a ausgehenden Einschnittwand 9c befindlichen Vorsprung 14 (vergl. Fig. 4 und Fig. 5, in welchen die einlaufende Einschnittkante 9a zu sehen ist) und einer mit diesem korrespondierend ausgeführten, an der von der auslaufenden Einschnittkante 9b ausgehenden Einschnittwand 9c vorhandenen Vertiefung 15 (vergl. Fig. 4 und Fig. 5, in welchen die auslaufende Einschnittkante 9b zu sehen ist) gebildet ist. "Korrespondierend" bedeutet, dass die in der Einschnittzone 9z vorliegende Breite b_{E} (Fig. 4b) - wie bereits erwähnt - konstant ist. Gemäß Fig. 4b und Fig. 5b ist der Vorsprung 14, im in Draufsicht senkrecht zur Einschnittmittellinie m_{E} verlaufenden Querschnitt betrachtet, von der Bezugslinie Lz geschnitten und die Vertiefung 15 befindet sich, im zuletzt erwähnten Querschnitt betrachtet, außerhalb der Bezugslinie Lz.

Wie Fig. 3 in Kombination mit Fig. 4 und Fig. 4a zeigt, verlaufen die randseitigen Einschnittabschnitte 13, im Bereich außerhalb der Einschnittzone 9z, im in Draufsicht senkrecht zur Einschnittmittellinie m_{E} verlaufenden Querschnitt betrachtet (vergl. Lage der Linie IV-IV in Fig. 3), gerade sowie in radialer Richtung (Fig. 4, Fig. 4a), wobei die randseitigen Einschnittabschnitte 13 - je nach Ausgestaltung der Grundanhebungen 16 (Fig. 3) und Ausgestaltung des Einschnittgrunds 9d sowie in Abhängigkeit des erwähnten Abstands a_{Z1} (Fig.3) - die Einschnittzone 9z an ihren Längsenden, also den Zonenendabschnitten 9z' (Fig. 3), umlaufen oder durch den jeweiligen Zonenendabschnitt 9z' unterbrochen sind.

Wie Fig. 3 zeigt, sind die seitlichen Einschnittteile 12a und der mittlere Einschnittteil 12b im Bereich außerhalb der Einschnittzone 9z von einen zwischen den Einschnittkanten 9a, 9b und dem radial äußeren Ende der Einschnittzone 9z verlaufenden, radial äußeren Sektor 12a₁ (seitliche Einschnittteile 12a), 12b₁ (mittlerer Einschnittteil 12b, vergl. Fig. 5) und einen zwischen dem radial inneren Ende der Einschnittzone 9z und dem Einschnittgrund 9d verlaufenden, radial inneren Sektor 12a₂ (seitliche Einschnittteile 12a), 12b₂ (mittlerer Einschnittteil 12b, vergl. Fig. 5) gebildet.

Die radial äußeren Sektoren 12a₁, 12b₁ verlaufen, im in Draufsicht senkrecht zur Einschnittmittellinie m_{E} verlaufenden Querschnitt betrachtet, gerade sowie in radialer Richtung (Fig. 5, Fig. 5a: Gezeigt für radial äußeren Sektor 12b₁).

Gemäß Fig. 5b sind die Enden des radial inneren Sektors 12b₂ des mittleren Einschnittteils 12b, im in Draufsicht senkrecht zur Einschnittmittellinie m_{E} verlaufenden Querschnitt betrachtet, durch einen am radial äußeren Ende des radial inneren Sektors 12b₂ auf der Einschnittmittelfläche M_{E} liegenden, radial äußeren Bezugspunkt Pₐ und einen am radial inneren Ende des radial inneren Sektors 12b₂ auf der Einschnittmittelfläche M_{E} liegenden, radial inneren Bezugspunkt Pᵢ definiert. Der radial innere Sektor 12b₂ verläuft, im zuletzt erwähnten Querschnitt betrachtet, mit gleichbleibender Krümmungsrichtung durchgehend gebogen, wobei die Krümmungsrichtung des radial inneren Sektors 12b₂ mit der Krümmungsrichtung der Einschnittzone 9z am maximal ausgelenkten Punkt P_{Z} übereinstimmt und wobei sich der radial innere Sektor 12b₂ - bezogen auf die Einschnittmittelfläche M_{E} - vom radial äußeren Bezugspunkt Pₐ zum radial inneren Bezugspunkt Pᵢ, und daher in Richtung zum Einschnittgrund 9d, von einer in radialer Richtung durch den maximal ausgelenkten Punkt Pz verlaufenden Bezugslinie Lz* zunehmend entfernt. Ein im Bereich des radial inneren Sektors 12b₂ zwischen der Einschnittmittelfläche M_{E} und der Bezugslinie L_{Z}* senkrecht zur Bezugslinie Lz* ermittelter gegenseitiger Abstand a_{b2} nimmt daher vom radial äußeren Bezugspunkt Pₐ zum radial inneren Bezugspunkt Pᵢ fortlaufend zu. Entsprechend der erwähnten, übereinstimmenden Krümmungsrichtung befindet sich eine zwischen dem radial äußeren Bezugspunkt Pₐ und dem radial inneren Bezugspunkt Pᵢ gerade verlaufende Bezugslinie L_{b2} gegenüber der Bezugslinie Lz* an der anderen Seite der Einschnittmittelfläche M_{E}. Somit befindet sich die Bezugslinie L_{b2} an derselben Seite der Einschnittmittelfläche M_{E} wie die Bezugslinie L_{Z}. Der radial innere Sektor 12b₂ weist eine in radialer Richtung zwischen dem radial äußeren Bezugspunkt Pₐ und dem radial inneren Bezugspunkt Pᵢ ermittelte Länge c_{b2} von 10% bis 25%, insbesondere von 15% bis 20%, der maximalen Tiefe t_{E} (Fig. 4, Fig. 5) des Einschnitts 5 auf und verläuft - bezogen auf die Bezugslinie L_{b2} - zur radialen Richtung unter einem Winkel β von 2° bis 15°, insbesondere von 4° bis 10°. Die Neigung des radial inneren Sektors 12b₂ ist somit derart, dass dieser ausgehend vom Einschnittgrund 9d zum auslaufenden, randseitigen Blocksegment 11b geneigt ist (vergl. Fig. 1). Der radial innere Sektor 12b₂ entfernt sich daher mit zunehmender Tiefe vom auslaufenden, randseitigen Blocksegment 11b.

Wie insbesondere Fig. 3 und Fig. 5a zeigt, bilden die radial inneren Sektoren 12a₂ je einen tangentialen (knickstellenfreien) Übergang vom radial inneren Sektor 12b₂ zu den radial innerhalb der Einschnittzone 9z liegenden Bereichen der randseitigen Einschnittabschnitte 13 (vergl. Fig. 5a). Gemäß Fig. 3 sind die Einschnittwände 9c im Bereich außerhalb der Einschnittzone 9z sowie im Bereich außerhalb der radial inneren Sektoren 12a₂, 12b₂ von unstrukturierten, im in Draufsicht senkrecht zur Einschnittmittellinie m_{E} verlaufenden Querschnitt gerade und in radialer Richtung verlaufenden Wandabschnitten 9c' gebildet, sodass in diesem Bereich die Einschnittmittelfläche M_{E} eben ist.

Die Erfindung ist auf das beschriebene Ausführungsbeispiel nicht beschränkt.

Die Einschnitte 9 können in beliebigen zur Laufstreifenperipherie reichenden Profilpositiven, daher auch in in Umfangsrichtung umlaufenden Profilrippen oder schulterseitigen Profilblöcken, ausgebildet sein, wobei die Einschnitte 9 ein- oder beidseitig innerhalb der Profilpositive enden können, sodass diese die Profilpositive nicht durchqueren. Bevorzugt durchqueren die Einschnitte 9 die Profilpositive, wobei bei schulterseitigen Profilpositiven unter durchquerenden Einschnitten 9 solche Einschnitte verstanden werden, welche die Profilpositive zumindest innerhalb der Bodenaufstandsfläche durchqueren. Die Bodenaufstandsfläche entspricht dem statisch ermittelten Footprint (ermittelt mit einem auf einer Normfelge montierten Reifen, Last bei 70% der maximalen Tragfähigkeit, Innendruck 85% des Normdruckes, gemäß ETRTO-Standards). Die Einschnitte 9 können bezogen auf die Einschnittbasislinie B_{L} in Draufsicht durchgehend gebogen (kreisbogenartig) verlaufen.

In schulterseitigen Profilblöcken ist die Neigung des radial inneren Sektors 12b₂ bevorzugt derart, dass dieser ausgehend vom Einschnittgrund 9d zum auslaufenden randseitigen Blocksegment geneigt ist.

Der in Draufsicht trapezförmig verlaufende mittiger Einschnittabschnitt 12 ist in seiner kompletten Form - bestehend aus dem mittleren Einschnittteil 12b und den beiden seitlichen Einschnittteilen 12a - optional. Die Einschnitte 9 weisen vom mittigen Einschnittabschnitt 12 zumindest den mittleren Einschnittteil 12b auf, welcher von der ausgebauchten Einschnittzone 9z durchquert und derart in den radial äußeren Sektor 12b₁ und den radial inneren Sektor 12b₂ gegliedert ist.

Die Einschnitte 9 weisen bevorzugt jeweils zumindest einen in Draufsicht in Form eines basislosen, insbesondere gleichschenkeligen Trapezes verlaufenden, mittleren Einschnittabschnitt 12 auf. Bei mehreren mittleren Einschnittabschnitten 12 können diese gemeinsame Trapezschenkel, also gemeinsame je einen Trapezschenkel bildende Teilabschnitte, aufweisen.

Die Einschnitte 9 verlaufen, in Draufsicht betrachtet, zur axialen Richtung unter einem Winkel von 0° bis 60°, insbesondere von 10° bis 50°, wobei sich der Winkel bei Einschnitten 9 mit gerade verlaufender Einschnittmittellinie m_{E} auf die Einschnittmittellinie m_{E} und bei Einschnitten 9 mit nicht gerade verlaufender Einschnittmittellinie m_{E} auf eine in Draufsicht gerade zwischen den Enden der Einschnittmittellinie m_{E} verlaufende Linie bezieht. Diese Linie fällt beim beschriebenen Ausführungsbeispiel mit der Einschnittbasislinie B_{L} zusammen. Ferner verlaufen die Einschnitte 9 vorzugsweise zumindest in Gruppen und insbesondere zumindest innerhalb des jeweiligen Profilpositivs parallel zueinander.

Der Einschnittgrund 9d kann herkömmlich, also nicht kanalförmig, ausgeführt sein. Ferner kann der Einschnittgrund 9d kanalförmig sein und, im in Draufsicht senkrecht zur Einschnittmittellinie m_{E} verlaufenden Querschnitt betrachtet, eine von der beim Ausführungsbeispiel beschriebenen Kreissegmentform abweichende Gestalt aufweisen. Beispielsweise kann der Einschnittgrund 9d, im erwähnten Querschnitt betrachtet, oval oder komplett asymmetrisch ausgeführt sein. "Komplett asymmetrisch" bedeutet, dass der Einschnittgrund 9d keine Symmetrieebene aufweist.

Der Laufstreifen muss nicht laufrichtungsgebunden ausgeführt sein.

Die Grundanhebungen 16 in den randseitigen Einschnittabschnitten 13 sind optional.

Die Einschnitte können frei von randseitigen Einschnittabschnitten 13 sein.

### Bezugszeichenliste

- 1: mittiger Profilblock
- 2: zentrale Umfangsrille
- 3: schulterseitige Umfangsrille
- 4: Sackrille
- 5: Einschnitt
- 6: Blockaußenfläche
- 7a: einlaufende Blockkante
- 7b: auslaufende Blockkante
- 8: Blockeckbereich
- 9: Einschnitt
- 9a: einlaufende Einschnittkante
- 9b: auslaufende Einschnittkante
- 9c: Einschnittwand
- 9c': Wandabschnitt
- 9d: Einschnittgrund
- 9z: Einschnittzone
- 9z₁: Zonenhälfte
- 9z': Zonenendabschnitt
- 10: mittleres Blocksegment
- 11a: einlaufendes, randseitiges Blocksegment
- 11b: auslaufendes, randseitiges Blocksegment
- 12: mittiger Einschnittabschnitt
- 12a: seitlicher Einschnittteil
- 12a₁: radial äußerer Sektor
- 12a₂: radial innerer Sektor
- 12b: mittlerer Einschnittteil
- 12b₁: radial äußerer Sektor
- 12b₂: radial innerer Sektor
- 13: randseitiger Einschnittabschnitt
- 14: Vorsprung
- 15: Vertiefung
- 16: Grundanhebung
- A-A: Linie (Reifenäquatorialebene)
- a₁, a_{b2}, a_{Z1}: Abstand
- a_{Z}: maximale Auslenkung
- b_{E}, b_{Z}: Breite
- B_{L}: Einschnittbasislinie
- c_{E}, c₁, c_{b2}: Länge
- c_{b}: Erstreckungslänge
- cz, c_{Z}': maximale Länge
- d: Durchmesser
- E₁, E_{Z1}, E_{Z2}: Symmetrieebene
- K: Rillen-Einschnitt-Kombination
- L_{b2}, Lz, L_{Z}: Bezugslinie
- m_{E}: Einschnittmittellinie
- M_{E}: Einschnittmittelfläche
- M_{P}: Kreismittelpunkt
- P, P: Punkt
- Pₐ: radial äußerer Bezugspunkt
- Pᵢ: radial innerer Bezugspunkt
- P_{Z}: maximal ausgelenkter Punkt
- r: Radius
- R: Pfeil (Abrollrichtung)
- S: Anschlussstelle
- S_{E}: Schnittpunkt
- S₃: Pfeil (Sichtrichtung)
- TB: Trapezbasislinie
- t_{E}: maximale Tiefe
- t_{E2}, t_{Z2}: Tiefe
- T_{P}: Profiltiefe
- Z₂ₐ,Z_{4b},Z₅ₐ: Detail
- α, β: Winkel

## Patentansprüche

1. Fahrzeugreifen mit einem Laufstreifen mit durch Rillen (2, 3, 4) (mit)begrenzten Profilpositiven (1) mit in Draufsicht zur axialen Richtung unter einem Winkel von 0° bis zu 60° verlaufenden Einschnitten (9) mit jeweils einem Einschnittgrund (9d), Einschnittkanten (9a, 9b), einer an der Laufstreifenperipherie liegenden Einschnittmittellinie (m_{E}), einer von dieser ausgehenden Einschnittmittelfläche (M_{E}), einer Breite (b_{E}) von 0,30 mm bis 2,00 mm und einer maximalen Tiefe (t_{E}) von 70% bis 100% der Profiltiefe (T_{P}),
wobei jeder Einschnitt (9), in Draufsicht betrachtet, zumindest einen mittleren Einschnittteil (12b) aufweist, welcher, im in Draufsicht senkrecht zur Einschnittmittellinie (m_{E}) ausgerichteten Querschnitt betrachtet, eine von den Einschnittkanten (9a, 9b) und dem Einschnittgrund (9d) in radialer Richtung beabstandete, bogenförmig verlaufende Einschnittzone (9z) mit einem auf der Einschnittmittelfläche (M_{E}) liegenden, maximal ausgelenkten Punkt (Pz) aufweist, wobei die Einschnittzone (9z), in Frontansicht betrachtet, den mittleren Einschnittteil (12b) parallel zur Laufstreifenperipherie durchquert und diesem einen zwischen den Einschnittkanten (9a, 9b) und der Einschnittzone (9z) verlaufenden, radial äußeren Sektor (12b₁) und einen zwischen der Einschnittzone (9z) und dem Einschnittgrund (9d) verlaufenden, radial inneren Sektor (12b₂) verleiht,
wobei der radial innere Sektor (12b₂) zwischen einem auf der Einschnittmittelfläche (M_{E}) liegenden, radial äußeren Bezugspunkt (Pₐ) und einem auf der Einschnittmittelfläche (M_{E}) liegenden, radial inneren Bezugspunkt (Pᵢ) verläuft,
**dadurch gekenzeichnet,**
dass der radial innere Sektor (12b₂), im in Draufsicht senkrecht zur Einschnittmittellinie (m_{E}) ausgerichteten Querschnitt betrachtet, bezogen auf die Einschnittmittelfläche (M_{E}) durchgehend gebogen sowie mit übereinstimmender Krümmungsrichtung zur Einschnittzone (9z) im Bereich ihres maximal ausgelenkten Punkts (P_{Z}) verläuft, wobei sich der radial innere Sektor (12b₂) von seinem radial äußeren Bezugspunkt (Pₐ) zu seinem radial inneren Bezugspunkt (Pᵢ) von einer in radialer Richtung durch den maximal ausgelenkten Punkt (Pz) der Einschnittzone (9z) verlaufenden Bezugslinie (Lz*) zunehmend entfernt.

2. Fahrzeugreifen nach Anspruch 1, **dadurch gekennzeichnet, dass** der radial innere Sektor (12b₂), im in Draufsicht senkrecht zur Einschnittmittellinie (m_{E}) ausgerichteten Querschnitt betrachtet, eine in radialer Richtung zwischen seinem radial äußeren Bezugspunkt (Pₐ) und seinem radial inneren Bezugspunkt (Pᵢ) ermittelte Länge (c_{b2}) von 10% bis 25%, insbesondere von 15% bis 20%, der maximalen Tiefe (t_{E}) des Einschnitts (5) aufweist.

3. Fahrzeugreifen nach Anspruch 1 oder 2, **dadurch gekennzeichnet, dass** der radial innere Sektor (12b₂), im in Draufsicht senkrecht zur Einschnittmittellinie (m_{E}) ausgerichteten Querschnitt betrachtet und bezogen auf eine zwischen dem radial äußeren Bezugspunkt (Pₐ) und dem radial inneren Bezugspunkt (Pᵢ) gerade verlaufende Bezugslinie (L_{b2}), zur radialen Richtung unter einem Winkel (β) von 2° bis 15°, insbesondere von 4° bis 10°, verläuft.

4. Fahrzeugreifen nach einem der Ansprüche 1 bis 3, **dadurch gekennzeichnet, dass** der Einschnitt (9), in Draufsicht betrachtet, einen aus dem bzw. jedem mittlere Einschnittteil (12b) und jeweils zwei seitlichen Einschnittteilen (12a) gebildeten bis zum Einschnittgrund (9d) reichenden, in Form eines basisfreien Trapezes verlaufenden Einschnittabschnitt (12) aufweist, wobei der mittlere Einschnittteil (12b) die kürzere Grundseite des Trapezes und die seitlichen Einschnittteile (12a) die zwei Trapezschenkel bilden.

5. Fahrzeugreifen nach Anspruch 4, **dadurch gekennzeichnet, dass** die Einschnittzone (9z) in jeden seitlichen Einschnittteil (12a) hineinverläuft und bevorzugt jeden seitlichen Einschnittteil (12a), in Frontansicht betrachtet, parallel zur Laufstreifenperipherie durchquert.

6. Fahrzeugreifen nach einem der Ansprüche 1 bis 5, **dadurch gekennzeichnet, dass** der Einschnitt (9), in Draufsicht betrachtet, zumindest einen, bevorzugt zwei gerade verlaufende(n), randseitige(n) Einschnittabschnitt(e) (13) aufweist, insbesondere aus den zwei randseitigen Einschnittabschnitten (13) und dem in Form eines basisfreien Trapezes verlaufenden Einschnittabschnitt (12) zusammengesetzt ist, wobei der bzw. die randseitige(n) Einschnittabschnitt(e) (13) im Bereich außerhalb der Einschnittzone (9z), im in Draufsicht senkrecht zur Einschnittmittellinie (m_{E}) verlaufenden Querschnitt betrachtet, gerade sowie insbesondere in radialer Richtung verlaufen.

7. Fahrzeugreifen nach Anspruch 4 und 6, **dadurch gekennzeichnet, dass** die die Trapezschenkel bildenden, seitlichen Einschnittteile (12a) jeweils einen zwischen den Einschnittkanten (9a, 9b) und der Einschnittzone (9z) verlaufenden, radial äußeren Sektor (12a₁) und einen zwischen der Einschnittzone (9z) und dem Einschnittgrund (9d) verlaufenden, radial inneren Sektor (12a₂) aufweisen, wobei der radial innere Sektor (12a₂) des einen bzw. jedes seitlichen Einschnittteils (12a) einen tangentialen Übergang vom radial inneren Sektor (12b₂) des mittleren Einschnittteils (12b) zum bzw. zum jeweiligen radial innerhalb der Einschnittzone (9z) liegenden Bereich des bzw. des jeweiligen randseitigen Einschnittabschnitts (13) bildet.

8. Fahrzeugreifen nach Anspruch 4 und 6 oder nach Anspruch 7, **dadurch gekennzeichnet, dass** die Einschnittzone (9z) jeden seitlichen Einschnittteil (12a), in Frontansicht betrachtet, parallel zur Laufstreifenperipherie durchquert und jeweils mit einem Zonenendabschnitt (9z') in den bzw. jeden der randseitigen Einschnittabschnitt(e) (13) hineinverläuft, wobei der Zonenendabschnitt (9z') eine parallel zur Laufstreifenperipherie ermittelte, maximale Länge (cz') von bis zu 6,0 mm, insbesondere von bis zu 4,5 mm, aufweist.

9. Fahrzeugreifen nach einem der Ansprüche 1 bis 8, **dadurch gekennzeichnet, dass** die Einschnittzone (9z), im in Draufsicht senkrecht zur Einschnittmittellinie (m_{E}) ausgerichteten Querschnitt betrachtet, eine auf die Einschnittmittelfläche (M_{E}) bezogene, in radialer Richtung ermittelte Breite (b_{Z}) von 25% bis 45%, insbesondere von 30% bis 40%, der maximalen Tiefe (t_{E}) des Einschnitts (9) aufweist.

10. Fahrzeugreifen nach einem der Ansprüche 1 bis 9, **dadurch gekennzeichnet, dass** der Einschnittgrund (9d) kanalförmig ist und, im in Draufsicht senkrecht zur Einschnittmittellinie (m_{E}) ausgerichteten Querschnitt betrachtet, eine parallel zur Laufstreifenperipherie ermittelte maximale Breite (d) aufweist, welche 0,10 mm bis 0,50 mm, insbesondere 0,20 mm bis 0,40 mm, größer ist als die Breite (b_{E}) des Einschnitts (9).

11. Fahrzeugreifen nach Anspruch 10, **dadurch gekennzeichnet, dass** der Einschnittgrund (9d) kreissegmentförmig ausgeführt ist, sodass er einen Durchmesser (d) aufweist, welcher 0,10 mm bis 0,50 mm, insbesondere 0,20 mm bis 0,40 mm, größer ist als die Breite (b_{E}) des Einschnitts (9).

12. Fahrzeugreifen nach einem der Ansprüche 3 bis 11, **dadurch gekennzeichnet, dass** der Laufstreifen eine laufrichtungsgebundene Profilierung aufweist und die Profilpositive (1) Profilblöcke (1) sind, wobei die Profilblöcke (1) von den Einschnitten (9) durchquert sind und den Profilblöcken (1) jeweils ein beim Abrollen des Reifens bei Vorwärtsfahrt (Pfeil R) zuerst in den Untergrund eintretendes, einlaufendes, randseitiges Blocksegment (11a) und ein auslaufendes, randseitiges Blocksegment (11b) verleihen, wobei der radial innere Sektor (12b₂) des mittleren Einschnittteils (12b), im in Draufsicht senkrecht zur Einschnittmittellinie (m_{E}) verlaufenden Querschnitt betrachtet und bezogen die zwischen seinen radial äußeren Bezugspunkt (Pₐ) und seinen radial inneren Bezugspunkt (Pᵢ) gerade verlaufende Bezugslinie (L_{b2}), derart zur radialen Richtung geneigt verläuft, dass dieser ausgehend vom Einschnittgrund (9d) in Richtung zum auslaufenden, randseitigen Blocksegment (11b) geneigt ist.

13. Fahrzeugreifen nach Anspruch 12, **dadurch gekennzeichnet, dass** die Einschnittkanten (9a, 9b) jedes Einschnitts (8) eine beim Abrollen des Reifens bei Vorwärtsfahrt (Pfeil R) zuerst in den Untergrund eintretende, einlaufende Einschnittkante (9a) und eine auslaufende Einschnittkante (9b) sind, wobei die Einschnittzone (9z) aus einem an der von der einlaufenden Einschnittkante (9a) ausgehenden Einschnittwand (9c) befindlichen Vorsprung (14) und einer mit diesem korrespondierend ausgeführten, an der von der auslaufenden Einschnittkante (9b) ausgehenden Einschnittwand (9c) vorhandenen Vertiefung (15) gebildet ist.

14. Fahrzeugreifen nach einem der Ansprüche 1 bis 13, **dadurch gekennzeichnet, dass** der auf der Einschnittmittelfläche (M_{E}) liegende, maximal ausgelenkte Punkt (Pz) der Einschnittzone (9z), im in Draufsicht senkrecht zur Einschnittmittellinie (m_{E}) ausgerichteten Querschnitt betrachtet, ermittelt senkrecht zu einer die Einschnittmittelfläche (M_{E}) zwischen dem radial äußeren Ende der Einschnittzone (9z) und dem radial inneren Ende der Einschnittzone (9z) verbindenden, gerade verlaufenden Bezugslinie (Lz) eine maximale Auslenkung (az) von 0,5 mm bis 1,5 mm aufweist.
